# EUROPÄISCHE PATENTSCHRIFT

(11) **EP 1 741 951 B1**
(45) Veröffentlichungstag und Bekanntmachung des Hinweises auf die Patenterteilung: **21.09.2011**
(21) Anmeldenummer: 06008637.8
(22) Anmeldetag: 26.04.2006
(51) Int. Cl.: F16D 66/02

(54) **Sensor zur Erfassung des Verschleisses eines Bremsbelages.**
Wear sensor for a vehicle friction lining
Témoin d'usure de plaquette de frein pour véhicule automobile

(30) Priorität: 05.07.2005 DE 102005031328
(43) Veröffentlichungstag der Anmeldung: 10.01.2007
(73) Patentinhaber: Hirschmann Automotive GmbH, 6830 Rankweil-Brederis (AT)
(72) Erfinder: Kainrath, Christian, 6830 Rankweil-Brederis (AT)
(74) Vertreter: Greif, Thomas

(56) Entgegenhaltungen:
- WO-A-00/01954
- WO-A-94/11612
- DE-A1- 2 909 247
- DE-A1- 3 820 977
- DE-A1- 19 825 300
- DE-U1- 9 011 267

## Beschreibung

Die Erfindung betrifft einen Sensor oder einen Aktuator gemäß den Merkmalen des Oberbegriffes des unabhängigen Patentanspruches 1 oder 2.

Sensoren oder Aktuatoren (auch Aktoren genannt) mit Mitteln zur Erfassung bzw. Einstellung von Betriebsparametern bzw. Stellgrößen eines Systems sind bekannt. Hierbei ist es wichtig, dass die Mittel zur Einstellung bzw. Erfassung der Stellgrößen bzw. Betriebsparameter geschützt vor Umwelteinflüssen in einem Gehäuse untergebracht sind. Hier bietet es sich an, das Gehäuse aus Kunststoff herzustellen, wobei ein Material gewählt wird, welches hitzebeständig ist, um äußere Einflüsse, insbesondere Temperatureinflüsse, auf die Mittel zur Einstellung bzw. Erfassung auszuschließen. Solche hitzebeständigen Kunststoffe ummanteln die Mittel zur Einstellung bzw. Erfassung vollständig, wobei je nach Bauart des Sensors oder des Aktuators auch ein Kabelabgang aus dem Kunststoffgehäuse herausgeführt wird, wobei das Kabel mit dem Kunststoff ebenfalls mit dem hitzebeständigen Kunststoff umgeben wird, so dass die Ausgangssignale über das Kabel einer nachgeschalteten Auswerte- und/oder Steuereinheit zugeführt oder von dieser abgegeben werden können.

Werden solche Sensoren oder Aktuatoren stationär betrieben, ist die Wahl des Materials des Kunststoffes für das Gehäuse von untergeordneter Bedeutung, da bei solchen stationären Anwendungen nur Einflussfaktoren wie Temperatur, Druck, Feuchtigkeit, Spritzwasser und dergleichen, die auf das Gehäuse des Sensors bzw. des Aktuators wirken, berücksichtigt werden müssen. Anders verhält es sich bei der Anwendung von Sensoren oder Aktuatoren bei mobilen Anwendungen, wobei in nachteiliger Weise je nach verwendetem Kunststoff für das Gehäuse eine störende Geräuschentwicklung auftreten kann.

Das Dokument DE 3 820 977 offenbart einen Sensor gemäß dem Oberbegriff des Anspruchs 1.

Das Dokument WO 9 411 612 offenbart einen Aktuator gemäß dem Oberbegriff des Anspruchs 2.

Der Erfindung liegt daher die Aufgabe zugrunde, einen Sensor oder einen Aktuator bereitzustellen, bei dem die Mittel zur Erfassung bzw. Einstellung von Betriebsparametern bzw. Stellgrößen nach wie vor vor Umwelteinflüssen gut geschützt sind, die je nach Anwendungsfall die erforderliche mechanische Stabilität aufweisen und bei denen vor allen Dingen störende Geräuschentwicklungen vermieden werden.

Diese Aufgabe ist durch die Merkmale des Patentanspruches 1 oder 2 gelöst.

Erfindungsgemäß ist vorgesehen, dass bei einem Sensor oder alternativ bei einem Aktuator als hitzebeständiger Kunststoff zur Herstellung des Gehäuses das Material X 6952 verwendet wird. Dieses Material, ein Duroplast, hat den Vorteil, dass es das "Innenleben" des Sensors oder des Aktuators (also die Mittel, die der Erfassung von Betriebsparametern oder der Einstellung von Stellgrößen des Systems dienen) zuverlässig gegenüber Umwelteinflüssen von Außen abschirmt und gleichzeitig die erforderliche mechanische Stabilität aufweist, was insbesondere dann wichtig ist, wenn der Sensor oder der Aktuator über das Gehäuse an einem weiteren Teil des Systems befestigt wird. Der besondere Vorteil des Kunststoffmaterials X 6952 ist darin zu sehen, dass bei dem mobilen Einsatz eines Sensors oder eines Aktuators eine Geräuschentwicklung wirksam unterdrückt oder gänzlich vermieden wird. Das Material X 6952 ist von der Firma Vyncolit erhältlich.

In Weiterbildung der Erfindung ist vorgesehen, dass das hitzebeständige Kunststoffmaterial X 6952 in einem Kunststoffspritzgußverfahren zu dem Gehäuse des Sensors oder des Aktuators verarbeitet wird. Dadurch kann der Sensor oder der Aktuator sehr schnell und rationell, vor allen Dingen kostengünstig, hergestellt werden. Das "Innenleben" wird in eine Spritzgußform eingelegt und mit dem hitzebeständigen Material X 6952 umspritzt, so dass dieses "Innenleben" vollständig gekapselt ist. Je nach Bauart des "Innenlebens" kann vorgesehen werden, dass es vor dem Umspritzen mit dem hitzebeständigen X 6952 noch mit einer Schutzschicht, beispielsweise ebenfalls in einem Spritzgußverfahren, versehen wird.

Eine besonders bevorzugte und sich überraschend ergebende Anwendung ist die Verwendung des hitzebeständigen Kunststoffmaterials X 6952 bei Gehäusen von Sensoren oder Aktuatoren, die in oder an Fahrzeugen eingesetzt werden. Bei einem Fahrzeug handelt es sich um ein mobiles System, so dass hier der schon beschriebene Vorteil gegeben ist, dass aufgrund der Verwendung des Kunststoffmaterials X 6952 die Geräuschentwicklung deutlich reduziert oder sogar vermieden wird. Ganz besonders vorteilhaft ist der Einsatz von Sensoren, bei denen das Gehäuse aus X 6952 besteht, wobei der Sensor zur Erfassung der Abnutzung der Belagdicke eines Bremsbelages einer Bremsanlage des Fahrzeuges ausgebildet ist. Denn gerade bei diesem konkreten Anwendungsfall taucht das Problem auf, dass andere, bisher bekannte Kunststoffmaterialien eine störende Geräuschentwicklung aufweisen, die in vorteilhafter Weise mit der Verwendung des hitzebeständigen Kunststoffmaterials X 6952 beseitigt wird.

Bezüglich eines beispielhaften Aufbaus eines Sensors zur Erfassung der Abnutzung der Belagdicke eines Bremsbelages einer Bremsanlage eines Fahrzeuges wird auf die (EP 1 698 796 A1 (gilt als Stand der Technik gemäß Artikel 54(3) EPÜ) verwiesen, wobei die Verwendung des erfindungsgemäßen Materials nicht auf diesen konkreten Anwendungsfall beschränkt ist.

## Patentansprüche

1. Sensor mit Mitteln zur Erfassung von Betriebsparametern eines Systems, wobei der Sensor ein Gehäuse aus einem hitzebeständigen Kunststoff aufweist, **dadurch gekennzeichnet, dass** als Kunststoff das Material Duroplast X 6952 verwendet wird.

2. Aktuator mit Mitteln zur Einstellung von Stellgrößen eines Systems, wobei der Aktuator ein Gehäuse aus einem hitzebeständigen Kunststoff aufweist, **dadurch gekennzeichnet, dass** als Kunststoff das Material Duroplast X 6952 verwendet wird.

3. Sensor oder Aktuator nach einem der Ansprüche 1 oder 2, **dadurch gekennzeichnet, dass** der Kunststoff in einem Kunststoffspritzgußverfahren zu dem Gehäuse verarbeitet wird.

4. Fahrzeug mit einem Sensor oder Aktuator nach einem der vorhergehenden Ansprüche.

5. Bremsanlage eines Fahrzeuges mit einem Sensor nach Anspruch 1, **dadurch gekennzeichnet, dass** der Sensor zur Erfassung der Abnutzung, der Belagdicke eines Bremsbelages der Bremsanlage ausgebildet ist.

## Claims

1. Sensor having means for detecting operating parameters of a system, with the sensor having a housing which is composed of a heat-resistant plastic, **characterized in that** the plastic used is the thermosetting plastic material X 6952.

2. Actuator having means for setting actuating variables of a system, with the actuator having a housing which is composed of a heat-resistant plastic, **characterized in that** the plastic used is the thermosetting plastic material X 6952.

3. Sensor or actuator according to either of Claims 1 and 2, **characterized in that** the plastic is processed to form the housing in a plastic injection-moulding process.

4. Vehicle having a sensor or actuator according to one of the preceding claims.

5. Brake system of a vehicle having a sensor according to Claim 1, **characterized in that** the sensor is designed to detect the wearing of the lining thickness of a brake lining of the brake system.

## Revendications

1. Capteur comprenant des moyens pour détecter des paramètres de fonctionnement d'un système, le capteur présentant un boîtier en une matière plastique résistante à la chaleur, **caractérisé en ce que** la matière plastique utilisée est le matériau Duroplast X 6952.

2. Actionneur comprenant des moyens pour régler des grandeurs de commande d'un système, l'actionneur présentant un boîtier en une matière plastique résistante à la chaleur, **caractérisé en ce que** la matière plastique utilisée est le matériau Duroplast X 6952.

3. Capteur ou actionneur selon l'une des revendications 1 ou 2, **caractérisé en ce que** la matière plastique est mise en oeuvre dans un procédé de moulage par injection de plastique pour obtenir le boîtier.

4. Véhicule comprenant un capteur ou un actionneur selon l'une des revendications précédentes.

5. Équipement de freinage d'un véhicule comprenant un capteur selon la revendication 1, **caractérisé en ce que** le capteur est configuré pour détecter l'usure de l'épaisseur du revêtement d'une garniture de frein de l'équipement de freinage.
